Europäisches Patentamt

European Patent Office

Office européen des brevets

(19)

(11) Publication number: **0 117 037**
**B1**

(12) # EUROPEAN PATENT SPECIFICATION

(45) Date of publication of patent specification: **26.08.87**

(21) Application number: **84300165.2**

(22) Date of filing: **11.01.84**

(51) Int. Cl.⁴: **A 01 N 1/02,** F 25 D 3/10 //
F17C13/02, B01L7/00,
G05D23/20

(54) **Apparatus for freezing fertilized ova, spermatozoa or the like.**

(30) Priority: **14.01.83 JP 4738/83**

(43) Date of publication of application:
**29.08.84 Bulletin 84/35**

(45) Publication of the grant of the patent:
**26.08.87 Bulletin 87/35**

(84) Designated Contracting States:
**DE FR GB NL**

(56) References cited:
**EP-A-0 072 225**
**GB-A-2 096 827**
**US-A-3 971 876**
**US-A-4 030 314**

(73) Proprietor: **HOXAN CORPORATION**
**2-Nishi, 1-chome Kita 3-jyo**
**Chuo-ku Sapporo-shi Hokkaido (JP)**

(72) Inventor: **Kaneta, Hiroshi c/o Hoxan Laboratory**
**Hoxan Corporation No. 3-17 Kikusui Gojo 2-ch**
**ome**
**Shiroishi-ku Sapporo (JP)**
Inventor: **Sakao, Nobuo c/o Hoxan Laboratory**
**Hoxan Corporation No. 3-17 Kikusui Gojo 2-ch**
**ome**
**Shiroishi-ku Sapporo (JP)**
Inventor: **Kuraoka, Yasuo c/o Hoxan Laboratory**
**Hoxan Corporation No. 3-17 Kikusui Gojo 2-ch**
**ome**
**Shiroishi-ku Sapporo (JP)**

(74) Representative: **Crawford, Andrew Birkby et al**
**A.A. THORNTON & CO. Northumberland House**
**303-306 High Holborn**
**London WC1V 7LE (GB)**

Courier Press, Leamington Spa, England.

EP 0 117 037 B1

## Description

This invention relates to an apparatus for freezing fertilized ova or spermatozoa.

Artificial fertilization has been recently frequently carried out to improve the breed of domestic animals and the growth of domestic animals. In this case, fertilized ova and spermatozoa have been preserved by freezing the same.

It is known to fill the fertilized ova and spermatozoa in a buffer solution contained in a tube and to freeze the buffer solution as a method of freezing the fertilized ova and spermatozoa.

A temperature change with respect to time of a pure substance when the substance is cooled under a constant pressure is generally known as a cooling curve. The substance does not always start immediately freezing when the substance reaches its freezing point, but the substance will start generally freezing after the substance is supercooled to a temperature lower than its freezing point. Simultaneously, the temperature raises to its true freezing point, and the temperature of the substance then lowers again after the entire substance is completely frozen.

The buffer solution is supercooled during the freezing step according to the above-mentioned conventional freezing method. Then, the temperature of the buffer solution is thereafter immediately raised. This creates the death of fertilized ova and spermatozoa due to the thermal shock of this abrupt temperature change according to the conventional freezing method.

It has been proposed to avoid such a thermal shock in a method of freezing fertilized ova and spermatozoa to remove the buffer solution cooled to the freezing point and to holding a tube containing the buffer solution with a pincette preserved in liquefied nitrogen, thereby proceeding the freezing from the pincette. This method has not been used due to the fact that the removal of the tube may prevent freezing of the buffer solution and an automatic control of such method is difficult due to the complicated operations.

GB—A—2096827 acknowledges the above prior art and the problems associated therewith, and proposes in order to overcome these problems measuring and controlling the temperature of a specimen and operating a Peltier effect cooling device to effect short-term supplementary cooling at a local area for avoiding supercooling and consequent thermal shock. The problem with such an arrangement is that the physical and electrical devices provided to monitor and control temperature will be prone to error, for example because of manufacturing tolerances and aging, and thus sufficiently accurate control may not be possible. Furthermore the arrangement is expensive to construct.

The present applicant has proposed a novel method, as disclosed in Japanese Patent Application No. 124,996/1981 (on which EP—A—0072225 forming part of the state of the art according to Article 54 (3) EPC is based), of freezing fertilized ova and spermatozoa comprising the steps of placing articles to be frozen such as fertilized ova and spermatozoa in a buffer solution in a tube, cooling a region of the buffer solution containing no articles to be frozen with predetermined refrigerant so that the temperature of the buffer solution containing no articles to be frozen becomes lower than another region of the buffer solution containing the articles to be frozen, thereby producing crystalline nuclei in the region of the buffer solution containing no articles to be frozen, and then cooling the crystalline nuclei so that the nuclei grow so that the region of the buffer solution containing the articles to be frozen then begins to freeze, thereby freezing the articles to be frozen such as fertilized ova and spermatozoa.

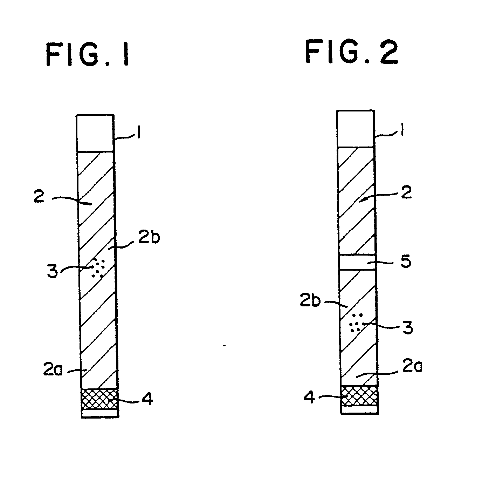

More particularly, in this method, whilst avoiding supercooling effects as shown in Figures 1 or 2, a buffer solution 2 is prepared by dissolving, for example, dimethyl sulfoxide (DMSO), dextrose, glycerin and/or sodium citrate in a distilled water, the buffer solution 2 thus prepared is filled in a tube 1, e.g., a straw tube as shown in Figure 1 or 2, and articles 3 to be frozen, e.g. fertilized ova and spermatozoa or the like are placed in the buffer solution 2.

A cotton plug 4 is fitted in the lower end of the tube 1, and the articles 3 to be frozen float in the middle of the buffer solution 2 as shown in Figure 1, or as shown in Figure 2 the articles 3 to be frozen are contained at irregular positions in the lower half portion of the buffer solution 2. Segmenting gaps 5 may sometimes be formed with air bubbles at positions within the buffer solution 2 as shown in Figure 2.

When the above tube 1 as shown in Figures 1 and 2 is cooled, the entirety of the tube 1 is not cooled initially, but a phase 2a free of articles to be frozen is first frozen and the crystalline nuclei thus produced are then grown to contact a buffer solution phase 2b, thereby freezing the articles 3 contained within phase 2b.

Accordingly, a primary object of this invention is to provide an apparatus for freezing fertilized ova and spermatozoa or the like which can be used to carry out the above-described method, can be readily handled by eliminating complicated operations such as cooling the tube 1 by dipping directly the tube in refrigerant such as an LN₂ and removal of the tube, can easily control the temperature thereof and can effectively avoid the death of the fertilized ova, spermatozoa or the like due to abrupt temperature rise.

The present invention provides an apparatus for freezing fertilized ova and spermatozoa comprising:

a heat transfer bottom board block formed at the lower end of a heat insulating peripheral wall with a lower refrigerant passage capable of flowing refrigerant,

a bottom board temperature sensor attached to said bottom board block for detecting the temperature of said bottom board block,

an upper heat transfer block placed on said bottom board block through a heat insulating joint member, formed with an upper refrigerant passage for flowing refrigerant,

a temperature control heater,

an upper block temperature sensor, and

a plurality of vertically arranged tube locating spaces for tubes containing fertilized ova and spermatozoa and a buffer solution, the spaces being opened at the top with the bottom board block forming a bottom tube locating member between said peripheral wall and said upper block whereby when the tubes are placed in the tube locating spaces with the fertilized ova and spermatozoa disposed adjacent said upper block, the tubes are cooled at their lower ends by said bottom board block and are cooled by said upper block at an upper part of the tubes containing fertilized ova and spermatozoa.

A preferred embodiment of the invention will now be described with reference to the accompanying drawings, wherein:—

Figure 1 is a front, longitudinally sectional explanatory view of a tube containing fertilized ova and spermatozoa of a prior art arrangement;

Figure 2 is a front, longitudinally sectional explanatory view of a tube containing fertilized ova and spermatozoa of another prior art arrangement;

Figure 3 is a front, longitudinally sectional explanatory view of an apparatus for freezing fertilized ova and spermatozoa constructed according to the present invention; and

Figure 4 is a graph showing the temperature controlling steps of respective sections for illustrating the operating states of the apparatus of Figure 3.

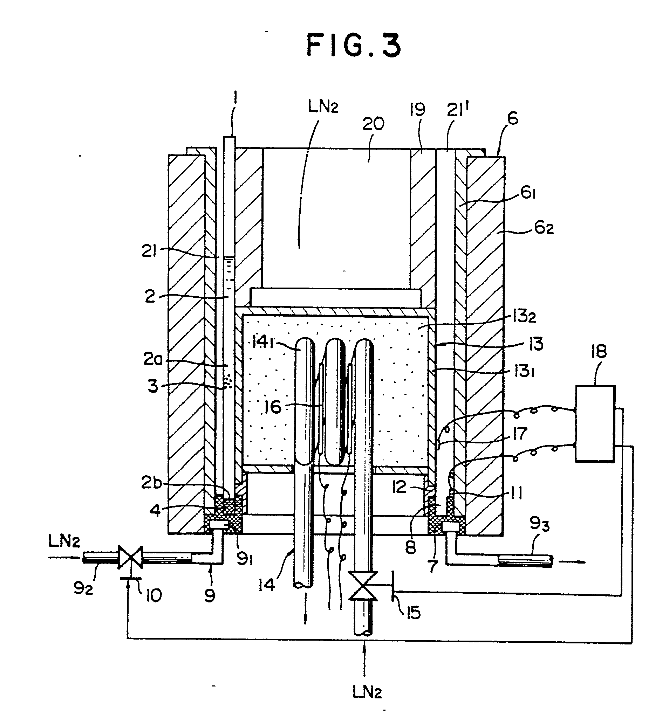

Referring to Figure 3, which shows a preferred embodiment of an apparatus for freezing fertilized ova and spermatozoa according to the present invention, wherein like reference numerals designate the same or equivalent parts in Figures 1 and 2, a heat insulating material $6_1$ is provided on the inside of a peripheral wall 6 such as a Teflon (trademark) or a fibre reinforced plastics to provide a heat insulating peripheral wall 6, and an annular heat transfer bottom board block 7 is fixedly secured by means such as an internal bonding to the lower end of the inner periphery of the peripheral wall 6.

The bottom board block 7 is formed of copper. A heat transfer recess 8 such as a hole or a peripheral groove is formed to be engaged with the lower end of the tube 1, to be described later, on the upper surface of the bottom board block 7. A lower refrigerant passage 9 is formed as a refrigerant cavity $9_1$ formed in the bottom board block 7, an inflow pipe $9_2$ connected to the cavity $9_1$ and an outflow pipe $9_3$ connected to the cavity, a control valve 10 being provided at the inflow pipe $9_2$ for opening and closing the pipe. When the control valve 10 is opened, the refrigerant such as $LN_2$ is passed through the passage 9. A bottom board temperature sensor 11 is provided to detect the temperature of the bottom board block 7 cooled by the refrigerant.

An upper heat transfer block 13 is laid on the top of the bottom board block 7 through a heat insulating joint member 12 of ring shape made of a fibre reinforced plastics. The upper block 13 shown in Figure 3 is constructed to enclose a copper mesh unit $13_2$ in a copper outer shell $13_1$ in such a manner that an upper refrigerant passage 14 formed with a heat exchange unit $14_1$, in which a coiled metal pipe is mounted, is buried in the mesh unit $13_2$. A control valve 15 is provided at a guide passage $14_1$ extended externally of the passage 14. When the control valve 15 is opened, the refrigerant such as $LN_2$ is flowed through the passage 14. A temperature control heater 16 is attached to the heat exchange unit $14_1$ for controlling a current to the heater 16, thereby regulating the temperature of the upper block 13 cooled by the $LN_2$. Further, in order to obtain the temperature of the block 13, an upper block temperature sensor 17 is provided in the vicinity of the lower portion in contact with the surface at the outer shell $13_1$.

Reference numeral 18 designates a controller capable of performing a calculation, which receives input signals from the temperature sensor 11 and the temperature sensor 17, and produces an output signal to control to open or close the valves 10 and 15. Further, there is also provided a cooling tank 20 which is formed of a wall 19 laid on the top of the upper block 13, to which tank the refrigerant such as $LN_2$ can be filled as required. When the $LN_2$ is filled in the tank 20, the tubes 1, 1, . . of which there are a plurality disposed around the board 7 which are filled with frozen fertilized ova therein, can be dipped and stored.

With the structure thus constructed described above, erecting tube charging spaces 21 opened at the top are formed with the bottom board block 7 used as a bottom member. When the above-described tubes 1, 1, . . shown in Figures 1 and 2 are respectively inserted into the tube charging spaces 21 and erected, the lower ends of the tubes 1, 1, . . charged into the heat transfer recess 8 are cooled by the bottom board block 7 and the upper parts above the lower ends of the tubes 1, 1, . . are cooled by the upper block 13. In the embodiment shown in Figure 3, the spaces 21 are opened as a hole 21' between the peripheral wall $6_1$ and the wall 19 formed in the same diameter as the upper block 13.

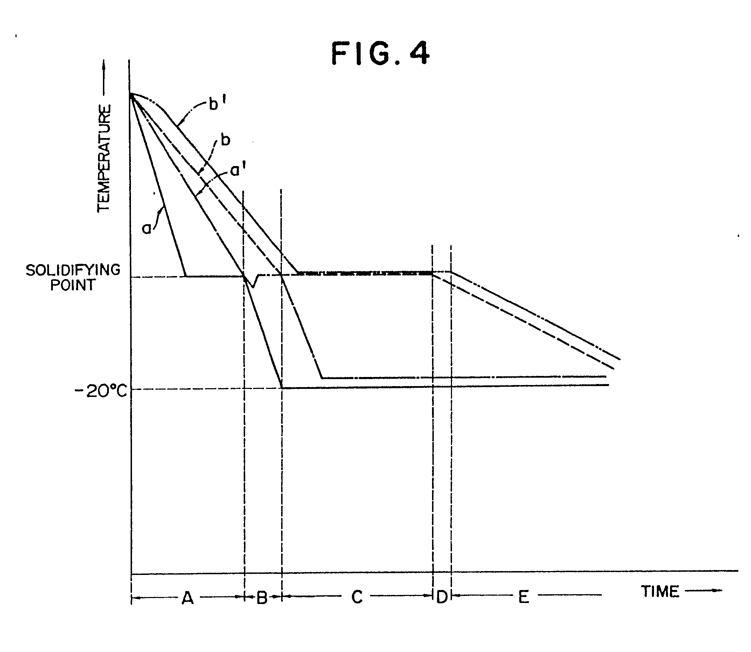

In order to, then, freeze the fertilized ova, spermatozoa or the like with the apparatus of the construction as described above, the tubes 1, 1, . . are respectively charged into the charging spaces 21, the valves 10 and 15 are opened by the controller 18, the heater 16 is controlled to heat the upper block 13 to a predetermined temperature. Thus, as shown by the first time zone A in Figure 4, the bottom board block 7 is cooled via liquid in passage 9, as designated by a solid line curve a in Figure 4, to the solidifying temperature of the buffer solutions 2 contained in the tubes 1, 1, . . and the solidifying point is maintained.

The upper block 13 is simultaneously cooled, as designated by a chain line curve b in Figure 4, by the $LN_2$ and the heater 16 to be controlled so that the cooling temperature becomes a level higher by approximately 5°C than the solidifying point at the final time point in the first time zone A of the bottom board block 7.

The bottom board block 7 which is thus maintained at the solidifying temperature is then further cooled to a level lower by −20°C than the solidifying temperature, in which case the upper block 13 is cooled continuously to the solidifying point when it reaches −20°C in the second time zone B.

When the bottom board block 7 is controlled to be cooled as described, the buffer solution of the boundary in contact with a plug 4 of the tube 1 placed on the block 7 is cooled, as designated by a dotted-broken line curve of a' in Figure 4, and the buffer solution of this part is partly supercooled to cause nuclei of the crystal to be produced, and the crystal is thereafter grown toward upward direction in the second time zone B.

In the third time zone C, the buffer solution 2 in the tube 1 is all frozen. Thus, the bottom board block 7 and the upper block 13 are controlled to be maintained in the constant temperature state. Further, in the fourth time zone D and fifth time zone E, only the upper block 13 is cooled, as shown in Figure 4, to the final freezing temperature. With a series of cooling controls as described above, the buffer solution in the vicinity of frozen state is cooled out of phase, as designated by two-dotted broken line b', from the cooling state b of the upper block 13. Consequently, no supercooling phenomenon occurs, and the article 3 to be frozen can be frozen.

With the apparatus according to the present invention as described above, the buffer solutions 2 in the tubes 1 can be controlled to be cooled in the buffer solution region 2b of the lower part of the tube containing the articles to be frozen by said bottom board block 7 and the buffer solution region 2a of an upper part of the tube above the buffer solution 2b and containing articles to be frozen by said upper block 13. Thus, nuclei of crystal is produced in the buffer solution 2b, then grown in the buffer solution 2a of the upper containing part of the solution, thereby eliminating the effect of abrupt temperature rise due to supercooling when the fertilized ova or spermatozoa is frozen. Consequently, the death of the fertilized ova or spermatozoa can be avoided, thereby obtaining the freezing of the fertilized ova or spermatozoa having high content of the survival rate.

Since the tubes 1, 1, .. are not dipped in liquid nitrogen, the handling of the apparatus of the invention can be simple and the temperature control can be readily automated.

## Claims

1. An apparatus for freezing fertilized ova or spermatozoa comprising:
a heat transfer bottom board block (7) formed at the lower end of a heat insulating peripheral wall (6) with a lower refrigerant passage (9) capable of flowing refrigerant,
a bottom board temperature sensor (11) attached to said bottom board block for detecting the temperature of said bottom board block,
an upper heat transfer block (13) placed on said bottom board block through a heat insulating joint member (12), formed with an upper refrigerant passage (14) for flowing refrigerant,
a temperature control heater (16),
an upper block temperature sensor (17), and
a plurality of vertically arranged tube locating spaces for tubes containing fertilized ova or spermatozoa and a buffer solution, the spaces being opened at the top with the bottom board block forming a bottom tube locating member between said peripheral wall and said upper block whereby when the tubes are placed in the tube locating spaces with the fertilized ova or spermatozoa disposed adjacent said upper block (13), the tubes are cooled at their lower ends by said bottom board block and are cooled by said upper block at an upper part of the tubes containing fertilized ova or spermatozoa.

2. The apparatus as claimed in claim 1, wherein said heat transfer bottom board block is annularly fixedly secured by an internal bonding to the lower end of the inner periphery of the peripheral wall and made of copper.

3. The apparatus as claimed in claim 1, wherein a lower refrigerant passage (9) is formed of a refrigerant cavity ($9_1$) formed in said bottom board block, an inflow pipe ($9_2$) connected to the cavity and an outflow pipe ($9_3$) connected to the cavity, and a control valve (10) provided at the inflow pipe for opening and closing the pipe.

4. The apparatus as claimed in claim 1, wherein said upper heat transfer block (13) is constructed as a copper mesh unit ($13_2$) in a copper outer shell ($13_1$) and an upper refrigerant passage (14) formed with a heat exchange unit ($14_1$), in which a coiled metal pipe is mounted, is buried in the mesh unit.

5. The apparatus as claimed in claim 4, wherein a temperature control heater (16) is attached to the heat exchange unit ($14_1$) for controlling a current to said temperature control heater to regulate the temperature of the upper heat transfer block.

6. The apparatus as claimed in claim 4, wherein an upper block temperature sensor (17) is provided in contact with the surface of the outer shell ($13_1$).

7. The apparatus as claimed in claim 6, wherein a controller (18) is provided to receive input signals from said bottom board temperature sensor and said upper block temperature sensor and to produce an output signal to control for opening or closing said control valve (10) provided at the inflow pipe ($9_2$) and a further control valve (15) is provided at a guide passage communicating with said upper refrigerant passage.

## Patentansprüche

1. Apparat zum Einfrieren befruchteter Ovula oder Spermien, enthaltend:
einen Wärmeübertragungsbodenwandblock (7) am unteren Ende einer wärmeisolierenden Umfangswand (6) mit einer unteren Kühlmittelleitung (9), die zur Durchleitung eines Kühlmittels geeignet ist,
einen Bodenwandtemperatursensor (11), der an dem Bodenwandblock befestigt ist, um die Temperatur des Dodenwandblocks zu erfassen,
einen oberen Wärmeübertragungsblock (13), der auf den Bodenwandblock über ein wärmeisolierendes Verbindungselement (12) aufgesetzt ist und mit einer oberen Kühlmittelleitung (14) zur Durchleitung von Kühlmittel versehen ist,
einen Temperaturregelheizer (16),
einen oberen Blocktemperatursensor (17), und
mehrere vertikal angeordnete Röhrenaufnahmeräume für Röhren, die befruchteter Ovula oder Spermien und eine Pufferlösung enthalten, wobei die Räume oben offen sind und der Bodenwandblock ein unteres Röhrenhalteelement zwischen der Umfangswand und dem oberen Block bildet, wodurch, wenn die Röhren in den Röhrenaufnahmeräumen angeordnet sind, mit den befruchteten Ovula oder Spermien benachbart dem oberen Block (13) die Röhren an ihren unteren Enden durch den Bodenwandblock gekühlt werden und von dem oberen Block an einem oberen Teil der Röhren gekühlt werden, der die befruchteter Ovula oder Spermien enthält.

2. Vorrichtung nach Anspruch 1, bei der der Wärmeübertragungsbodenwandblock ringförmig durch eine innere Verklebung mit dem unteren Ende des inneren Umfangs der Umfangswand fest verbunden ist und aus Kupfer besteht.

3. Vorrichtung nach Anspruch 1, bei der eine untere Kühlmittelleitung (9) aus einer Kühlmittelkammer (9₁) besteht, die in dem Bodenwandblock ausgebildet ist, aus einem Zuströmrohr (9₂), das mit der Kammer verbunden ist, und einem Ausströmrohr (9₃), das mit der Kammer verbunden ist, und aus einem Steuerventil (10), das in dem Zuströmrohr angeordnet ist, um das Rohr zu öffnen und zu schließen.

4. Vorrichtung nach Anspruch 1, bei der der obere Wärmeübertragungsblock (13) als eine Kupfermascheneinheit (13₂) in einer Kupferaußenschale (13₁) ausgebildet ist und eine obere Kühlmittelleitung (14), die mit einer Wärmetauschereinheit (14₁) versehen ist, in der ein gewendetes Metallrohr befestigt ist, in der Mascheneinheit eingebettet ist.

5. Vorrichtung nach Anspruch 4, bei der ein Temperaturregelheizer (16) an der Wärmetauschereinheit (14₁) befestigt ist, um einen Strom zu dem Temperaturregelheizer zu beeinflussen, um die Temperatur des oberen Wärmeübertragungsblocks zu regeln.

6. Vorrichtung nach Anspruch 4, bei der ein oberer Blocktemperatursensor (17) in Berührung mit der Oberfläche der äußeren Schale (13₁) vorgesehen ist.

7. Vorrichtung nach Anspruch 6, bei der ein Regler (18) vorgesehen ist, um Eingangssignale von dem Bodenwandtemperatursensor und dem oberen Blocktemperatursensor zu erhalten und ein Ausgangssignal für die Steuerung des öffnens oder Schließens des Steuerventils (10) zu erzeugen, das in dem Zuströmrohr (9₂) angeordnet ist, und für ein weiteres Steuerventil (15), das in einer Führungsleitung angeordnet ist, die mit der oberen Kühlmittelleitung in Verbindung steht.

## Revendications

1. Dispositif pour congeler des ovules fécondés ou des spermatozoïdes, comprenant:
un bloc-support inférieur (7) pour transfert de chaleur, formé à l'extrémité inférieure d'une paroi périphérique thermiquement isolante (6) et doté d'un passage inférieur de réfrigérant (9) permettant l'écoulement de réfrigérant;
un capteur (11) de température du bloc-support inférieur, fixé à ce dernier, pour détecter la température de celui-ci;
un bloc supérieur de transfert de chaleur (13) placé sur ledit bloc-support inférieur par l'intermédiaire d'un élément de jonction isolant (12) doté d'un passage supérieur de réfrigérant (14) pour l'écoulement de réfrigérant;
un organe chauffant (16) pour commande de température;
un capteur (17) de température du bloc supérieur; et
une pluralité d'espaces verticaux pour recevoir des tubes contenant des ovules fécondés ou des spermatozoïdes et une solution tampon, ces espaces étant ouverts à leur sommet, le bloc-support inférieur constituant un élément de positionnement inférieur des tubes entre ladite paroi périphérique et ledit bloc supérieur, de sorte que, lorsque les tubes sont placés dans les espaces destinés à les recevoir, les ovules fécondés ou spermatozoïdes étant disposés au voisinage dudit bloc supérieur (13), les tubes sont refroidis à leurs extrémités inférieures par ledit bloc-support inférieur et sont refroidis par ledit bloc supérieur en leur partie supérieure contenant les ovules fécondés ou les spermatozoïdes.

2. Dispositif selon revendication 1, dans lequel ledit bloc-support inférieur pour transfert de chaleur est solidarisé annulairement, inamoviblement, par une liaison interne, à l'extrémité inférieure de la périphérie intérieure de la paroi périphérique, et est en cuivre.

3. Dispositif selon revendication 1, dans lequel un passage inférieur de réfrigérant (9) est constitué par une cavite de réfrigérant (9₁) formée dans ledit bloc-support inférieur, par un tuyau d'admission (9₂) relié à la cavité, et par un tuyau de sortie (9₃) relié à la cavité, par une vanne de commande (10) prévue sur le tuyau d'admission pour ouvrir et fermer celui-ci.

4. Dispositif selon revendication 1, dans lequel ledit bloc supérieur de transfert de chaleur (13) est constitué par un ensemble fait d'un réseau de mailles en cuivre ($13_2$) disposé dans une enveloppe extérieure en cuivre ($13_1$) et dans lequel est enfoui un passage supérieur de refrigérant (14) formé par une unité d'échange de chaleur ($14_1$) dans laquelle est monté un tuyau métallique enroulé.

5. Dispositif selon revendication 4, dans lequel un organe chauffant (16) pour commande de température est fixé à l'unité d'échange de chaleur ($14_1$) pour commander le courant transmis audit organe de commande de température, afin de réguler la température du bloc de transfert de chaleur supérieur.

6. Dispositif selon revendication 4, dans lequel un capteur de température (17) du bloc supérieur est prévu au contact de la surface de l'enveloppe extérieure ($13_1$).

7. Dispositif selon revendication 6, dans lequel un moyen de commande (18) est prévu pour recevoir les signaux d'entrée provenant dudit catteur de température du bloc-support inférieur et provenant dudit capteur de température du bloc supérieur, et produire un signal de sortie commander l'ouverture ou la fermeture de ladite vanne de commande (10) prévue sur le tuyau d'admission ($9_2$), et une autre vanne de commande (15) est prévue sur un passage d'amenée communiquant avec ledit passage supérieur de réfrigérant.

# FIG. 1

# FIG. 2

# FIG.3

FIG. 4